# EUROPÄISCHE PATENTSCHRIFT

(11) **EP 1 817 507 B1**
(45) Veröffentlichungstag und Bekanntmachung des Hinweises auf die Patenterteilung: **03.09.2008**
(21) Anmeldenummer: 05795926.4
(22) Anmeldetag: 07.10.2005
(51) Int. Cl.: F16F 9/04, F16F 9/084

(54) **TIEFBETT-KLEMMKONTUR FÜR SCHLAUCHROLLBALG-LUFTFEDERN**
DROP BASE RING CLAMPING CONTOUR FOR ROLLING-BELLOWS-TYPE PNEUMATIC SPRINGS
CONTOUR DE SERRAGE A BASE CREUSE DESTINE A DES AMORTISSEURS PNEUMATIQUES A SOUFFLET TUBULAIRE

(30) Priorität: 24.11.2004 DE 102004056517
(43) Veröffentlichungstag der Anmeldung: 15.08.2007
(73) Patentinhaber: ContiTech Luftfedersysteme GmbH, 30165 Hannover (DE)
(72) Erfinder: BANK, Christoph, 31275 Lehrte (DE); CERNY, Paul, 30974 Wennigsen (DE); GAWINSKI, Hubertus, 31867 Lauenau (DE)
(74) Vertreter: Finger, Karsten
(86) Internationale Anmeldenummer: PCT/EP2005/010789
(87) Internationale Veröffentlichungsnummer: WO 2006/056267

(56) Entgegenhaltungen:
- EP-A- 0 319 448
- EP-A- 0 939 241
- DE-A1- 3 643 073
- DE-A1- 4 142 561
- US-A- 4 793 598

## Beschreibung

Die Erfindung betrifft eine Rollbalg-Luftfeder und zwar insbesondere die Befestigung eines Schlauchrollbalges an einem endseitig am Balg jeweils formschlüssig zugfest und druckdicht anzubringenden Anschlussteil (Luftfederdeckel und/oder Abrollkolben).

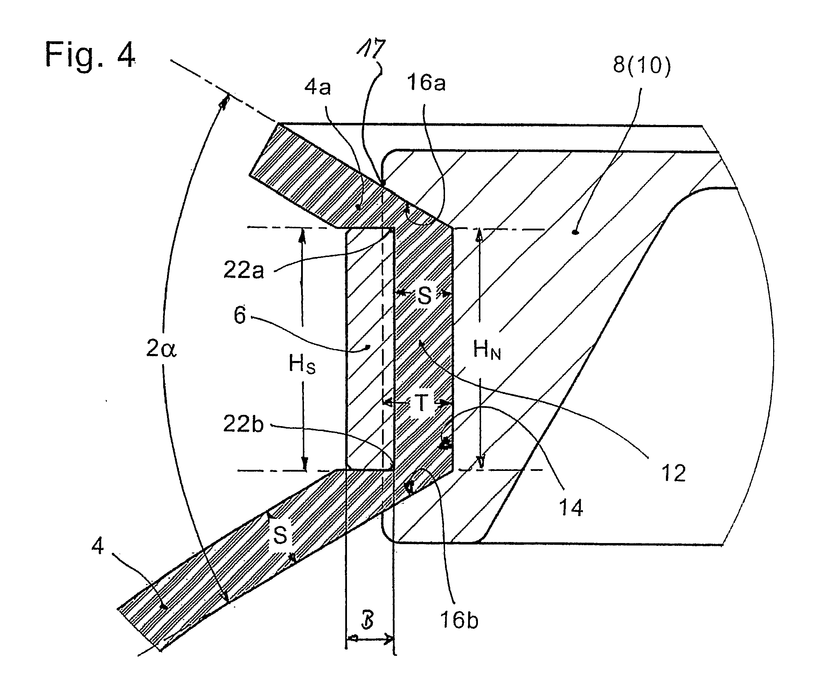

Die europäische Patentanmeldung 0 319 448 A2 beschäftigt sich mit der endseitigen Befestigung eines Luftfederbalges an jeweiligen Anschlussteilen. Die dortige Fig. 4 zeigt alle wesentlichen Details: Zur Befestigung eines Schlauchrollbalg-Endabschnittes weist das Befestigungsteil eine Nut auf. Diese Nut hat eine Grundfläche, die mit umlaufenden Rillen (24) versehen sein kann. Die Flanken der Nut sind teils gewölbt, teils unter verschiedenen Winkeln α und β konisch geneigt. Die Einspannung erfolgt durch Kompression des Balgs über die gesamte Höhe eines Spannringes. Da das Elastomermaterial des Balgs praktisch inkompressibel ist, hat die Einspannung über die gesamte Spannringhöhe h_{R} zur Folge, dass in beträchtlichem Ausmaß Elastomermaterial zu beiden Seiten des Spannringes in Balg-Längsrichtung herausgequetscht wird. In Anbetracht der Tatsache, dass der Balg mit einem - gegenüber dem Gummi - gering dehnbaren Festigkeitsträger versehen ist, besteht die Befürchtung, dass die beträchtliche Längsverschiebung des Elastomermaterials zu unerwünscht überhöhten Längsspannungen innerhalb des Balgs und damit zu einer möglichen Ablösung des Elastomermaterials von dem nur gering dehnbaren Festigkeitsträger führen könnte.

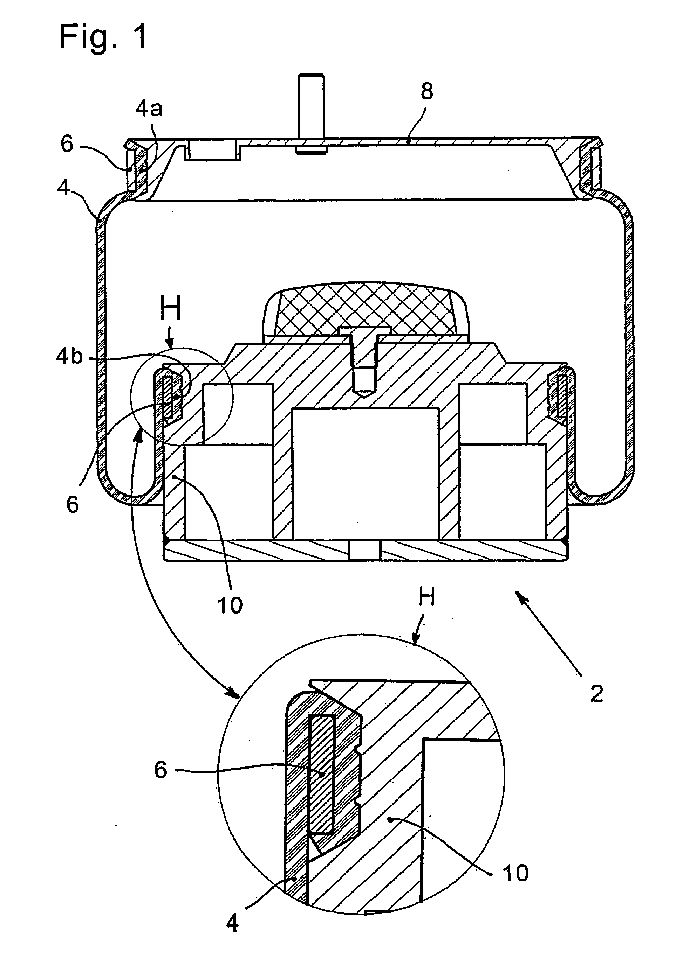

Um im Einspannbereich des Balgs derartige interne Längsspannungen zu vermeiden, schlägt die DE 41 42 561 A1 vor, den Endabschnitt des Balgs nicht über die gesamte Höhe des Spannringes einzupressen sondern lediglich an einem oberen und/oder unteren "Engpass" im Bereich mindestens einer der Flanken der Befestigungsnut. Die Fig. 4 zeigt an der unteren Nutflanke (22) den "Engpass" (21), während der Balg über die gesamte Einspannhöhe des Spannringes praktisch nicht komprimiert ist. Wegen des rechteckigen Nutquerschnitts bei dieser in Fig. 4 dargestellten Konstruktion erscheint das Einfügen des zu montierenden Spannringes nicht ohne weiteres möglich.
Eine leichtere Montagemöglichkeit lässt die in Fig. 1 dargestellte Variante erwarten. Auch hier besteht die Grundidee der Balgbefestigung darin, dass über die Höhe der Einspannlänge keine Kompression und damit keine größere Materialverschiebung in Balg-Längsrichtung gegeben ist, sondern dass die Einspannung vielmehr lediglich an kurzen Engpässen (21) im Bereich der Nutflanken erfolgt. Die abgerundete Einspanngeometrie weist keine "Griffigkeit" auf. Damit scheint bei dieser in Fig. 1 dargestellten Konstruktion die gewünschte Auszugsfestigkeit, insbesondere in dem Ausmaß, wie sie bei Nutzfahrzeugen zu fordern ist, nicht erfüllt zu sein.

### Aufgabe der Erfindung

Die Aufgabe der vorliegenden Erfindung besteht deshalb in einer zuverlässigen Befestigung eines Schlauchrollbalges an einem Anschlussteil, wobei eine Längsverschiebung von Elastomermaterial gegenüber dem darin integrierten Festigkeitsträger weitgehend vermieden wird.

### Lösung und Vorteile

Gemäß Anspruch 1 besteht die Lösung dieser Aufgabe insbesondere in einer einerseits wirkungsvolleren und andererseits montagefreundlicheren Gestaltung des mindestens einen Einspann-"Engpasses".

Der plastisch verformbare Spannring wird radial gestaucht. Aufgrund der konischen Ausbildung der Nutflanken ergibt sich eine selbstjustierende Einspannung des jeweils zwischen Nut und Spannring befindlichen Schlauchrollbalg-Endbereichs. Der zwischen der Spannringinnenfläche und dem Nutgrund befindliche Abschnitt des Schlauchrollbalg-Endbereichs ist dort nur knapp geklemmt, d.h. nur minimal gestaucht, um den Betrag, den die Inkompressibilität der Balgwand zulässt.

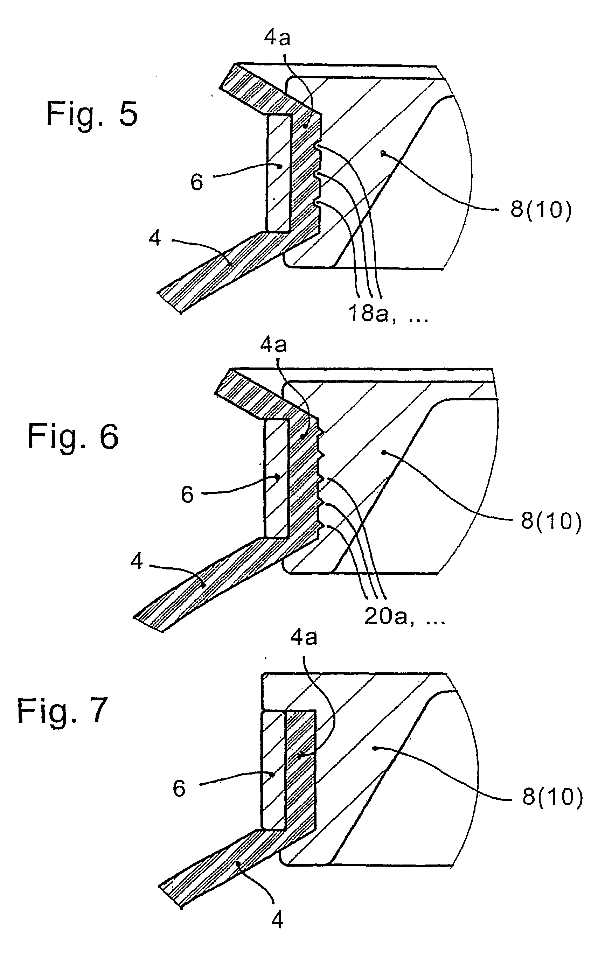

Dabei wird der Schlauchrollbalg über die gesamte Spannring-Höhe, die etwa der Höhe des Nut-Grundes entspricht, praktisch nicht gestaucht, was zur Folge hat, dass kein Material in Schlauchrollbalg-Längsrichtung verschoben wird. Eine Trennung von dem in das Elastomermaterial des Balgs integrierten Festigkeitsträger ist deshalb nicht zu befürchten. Eine Einspannung ist lediglich "punktuell" gegeben, nämlich an einem oberen und einem unteren "Engpass". Die hier realisierte Einspannung ist deshalb so wirkungsvoll, weil sich eine geradlinige Fläche (Nutflanke) und eine keilförmige Kante (des Spannringes) als "Einspannbacken" gegenüberstehen. Wegen der Kürze des Engpasses gibt es keine nennenswerte Längsverschiebung von Elastomermaterial. Deshalb ist auch hier ein Ablösen des Elastomermaterials von dem in den Schlauchrollbalg integrierten Festigkeitsträger nicht zu befürchten.
Bei nicht so hoch beanspruchten Klemmungen kann eine einseitige Tiefbettkontur (Fig. 7) ausreichen, um den Balg zu halten.

Aufgrund der geometrischen Verhältnisse (Nutgrundhöhe≃ Spannringhöhe und Öffnungswinkel α zwischen Lot und Flankenrichtung α = 25° bis 35° (bei einfach konischer Flanke) bzw. 2α = 50° bis 70° (falls beide Flanken konisch geneigt sind) ergibt sich, dass der Balg im Einspannpunkt auf ca 45% bis 65% seiner Stärke komprimiert wird.

Um höheren Dichtigkeitsanforderungen zu genügen und um eine weitere Erhöhung der Ausreißfestigkeit zu erreichen, kann es sinnvoll sein, den Tiefbettgrund mit einer zirkularen Profilierung (Vielzahnoberfläche, Fig. 5, oder einer Nutoberfläche, Fig. 6) zu versehen. Damit ergibt sich eine insgesamt höher belastbare Luftfedereinspannung.

Sind die Innenkanten des Spannringes leicht abgerundet oder sind die Innenkanten mit einer Fase versehen, so wird ein Durchtrennen des Balgs im Einspannpunkt zuverlässig vermieden.

Die erfindungsgemäße Ausbildung der Tiefbettklemmung eignet sich auch problemlos für sogenannte "gekrempelte" Schlauchrollbälge bzw. Schlauchrollbalg-Enden.

Da die erfindungsgemäße Tiefbettklemmung von Schlauchrollbälgen stark belastbar und äußerst zuverlässig ist, kann sie bevorzugt für Nutzfahrzeuge (Lkw und Busse) zum Einsatz gelangen.
Insgesamt stellen Schlauchrollbalgluftfedern mit der erfindungsgemäßen Tiefbettklemmung eine kostengünstigere Alternative zu Rollbalg-Luftfedern mit ringverstärkten Wülsten auf konischen Dichtflächen der Befestigungsteile dar.

### Zeichnungen

Die wesentlichen Merkmale der erfindungsgemäßen Idee werden anhand der beigefügten Abbildungen erläutert. Es zeigt:
Fig. 1 den Längsschnitt (Axialschnitt) durch eine Schlauchrollbalg-Luftfeder mit erfindungsgemäß befestigten Rollbalg-Enden;
Fig. 2 ebenfalls den Längsschnitt durch eine Schlauchrollbalg-Luftfeder, wobei das kolbenseitige Rollbalg-Ende vor der Montage gekrempelt wurde;
Fig. 3 den sich auf die Befestigungs-Nut beziehenden Ausschnitt des Anschlussteils (im Längsschnitt);
Fig. 4 den Ausschnitt: Anschlussteil/Rollbalg-Ende/Spannring (ebenfalls im Längsschnitt); und
Fig. 5 bis 7 verschiedene Ausbildungen der erfindungsgemäßen Nut.

### Beschreibung

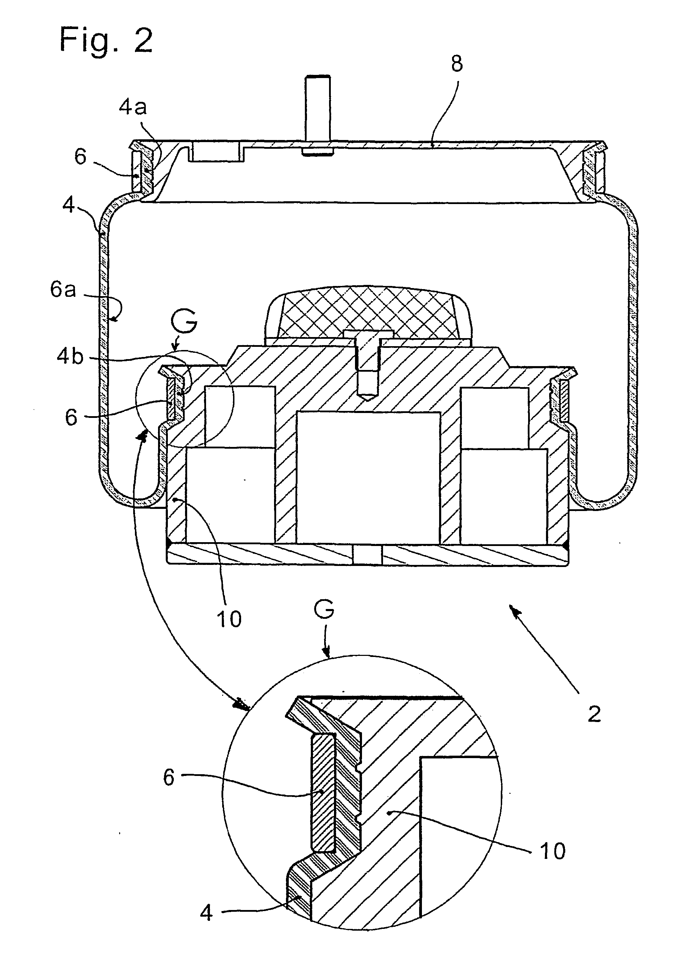

Die in den Figuren 1 und 2 dargestellten Luftfedern 2 bestehen im Wesentlichen aus einem Schlauchrollbalg 4, dessen Endabschnitte 4a, 4b formschlüssig, zugfest und druckdicht an jeweils einem Anschlussteil 8,10 angebracht sind. Das "obere" Anschlussteil 8 ist jeweils ein Luftfederdeckel, während das "untere" Anschlussteil 10 jeweils ein Abrollkolben ist. Zur Befestigung der Schlauchrollbalg-Enden 4a, 4b weisen die Anschlussteile 8, 10 jeweils eine speziell geformte Nut 12 auf. In diese Nuten 12 wird jeweils ein Endabschnitt 4a bzw. 4b eines Schlauchrollbalges 4 gegeben und jeweils mit Hilfe eines Spannringes 6 verklemmt. Durch plastisches Verformen des Spannringes 6 wird der Schlauchrollbalg 4 in die im jeweiligen Anschlussteil 8 und/oder 10 umlaufende, als "Tiefbettkontur" ausgebildete Nut 12 gedrückt.

Von der in Fig. 1 dargestellten Luftfeder 2 unterscheidet sich die Luftfeder 2 gemäß Fig. 2 in der Weise, dass hier der Schlauchrollbalg 4 zwecks Befestigung am Abrollkolben 10 zunächst "gekrempelt" worden ist. Hierdurch kommt die Außenseite des diesbezüglichen Schlauchrollbalg-Endes 4b an der Berührungsfläche der Nut 12 des Abrollkolbens 10 zu liegen, während die Innenseite des Schlauchrollbalg-Endes 4b an der Innenseite des Spannringes 6 anliegt.

Der Vorteil der Befestigung eines zuvor "gekrempelten" Schlauchrollbalges 4 bzw. Schlauchrollbalg-Endes 4a bzw. 4b besteht darin, dass ein Einfedern auch im völlig drucklosen Zustand der Luftfeder 2 problemlos möglich ist. Ein Einknicken und damit Beschädigen des Schlauchrollbalges 4 wird zuverlässig vermieden.

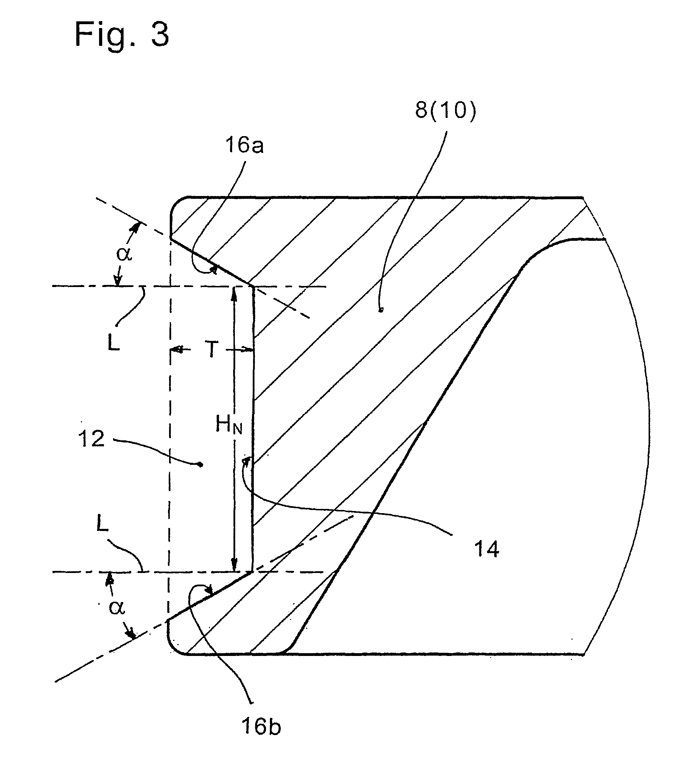

Nähere Einzelheiten der sich im Anschlussteil 8, 10 (Deckel 8 und/oder Abrollkolben 10) befindlichen Nut 12 zeigt die Fig. 3. Die Nut 12 weist einen kegelstumpfförmigen Querschnitt auf mit einem geradlinigen Grund 14 der Höhe H_{N} und geradlinig abgeschrägten Seitenflanken 16a, 16b. Die beiden Seitenflanken 16a, 16b sind gegenüber dem Lot L jeweils um den Winkel α geneigt, so dass die Nut 12 an ihrer Öffnung breiter ist als an ihrem Grund 14. Die Tiefe der Nut 12 ist mit "T" bezeichnet.

Wie aus Fig. 4 ersichtlich, ist die Tiefe T der Nut 12 größer als die Stärke S des Schlauchrollbalges 4. Auf diese Weise kommt die Innenseite des Spannringes 6 unterhalb der Oberkanten der Nut-Flanken 16a, 16b zu liegen. Der Abstand vom Tiefbettgrund 14 zum Spannring 6 entspricht dabei ca. der Wandstärke S des Schlauchrollbalges 4.
Um Beschädigungen der Balgwand zu vermeiden, ist der Spannring 6 an seinen umlaufenden Kanten mit Fasen (0,5 x 45°) versehen. Um ein Abziehen des Spannringes 6 zu vermeiden, sollte die Tiefe der Nut 12 ca. Balgwandstärke +½ Spannringbreite B sein. Durch Einpresstiefe und Höhe des Spannringes 6 sowie Variation des Flankenwinkels α der Tiefbettkontur 12 kann die Verringerung der Balgwandstärke S im Bereich der Spannringkante variiert werden. Je nach Aufbau der Balgwand und Anforderung an die Klemmung kann die optimale Balgwandstärken-Reduzierung bei 30% bis 75% Balgwandstärke S liegen.

Darüber hinaus ist aus der Fig. 4 zu entnehmen, dass die Spannring-Höhe H_{S} ungefähr der Höhe H_{N} des Nut-Grundes 14 entspricht.

Aus den dargestellten geometrischen Verhältnissen ergibt sich, dass die erfindungsgemäße Einspannung zwei "Engpässe" aufweist, nämlich jeweils einen zwischen der oberen und der unteren inneren Kante des Spannringes 6 einerseits und der jeweiligen Flanke 16a bzw. 16b der Nut 12 andererseits. Dabei ergibt sich eine punktuelle Kompression des Balgs 4 auf ca. 50% seiner Stärke S.
(Eine zweifach "punktuelle" Kompression ergibt sich lediglich in der Schnittbild-Darstellung. Tatsächlich erfolgt eine zweifach *zirkulare* Kompression entlang der inneren Ober- und der inneren Unterkante des kreisringförmigen Spannringes 6.)

Die Figuren 5 bis 7 zeigen spezielle Ausführungsformen der erfindungsgemäßen Schlauchrollbalg-Einspannung:
Gemäß Fig. 5 weist der Nutgrund 14 Erhöhungen 18a, 18b, ... auf, die auf der zylindrischen Nutfläche umlaufend angeordnet sind.
Gemäß Fig. 6 sind im Nutgrund 14 umlaufende Vertiefungen 20a, 20b, ... vorgesehen. Fig. 7 zeigt eine "einseitige" Einklemmung eines Schlauchrollbalg-Endes 4a bzw. 4b. D. h.: Die erfindungsgemäß vorgesehene Nutflanken-Abschrägung ist lediglich an einer einzigen Nut-Flanke 16a ausgebildet, während die andere Nutflanke 16b rechtwinklig ist und nicht zur Einspannung des Schlauchrollbalg-Endes 4a bzw. 4b beiträgt.

### Bezugszeichenliste

- 2: Schlauchrollbalg-Luftfeder
- 4: Schlauchrollbalg
- 4a, 4b: Endabschnitt(e), Endbereich(e) des Schlauchrollbalgs
- 6: Spannring
- 6a: Innenseite des Rollbalgs 4
- 8,10: Anschlussteil(e)
- 8: Luftfederdeckel
- 10: Abrollkolben
- 12: Befestigungsnut im Anschlussteil 8 und/oder 10, Nut, "Tiefbettkontur"
- 14: Grund, Tiefbettgrund, Boden der Nut
- 16a, 16b: Flanke(n) der Nut
- α: Öffnungswinkel einer Flanke
- L: Lot
- H_{N}: Höhe der Nut
- T: Tiefe der Nut
- H_{S}: Höhe des Spannringes
- B: Spannringbreite
- S: Stärke des Schlauchrollbalges
- 17: Nutoberkante
- 18a, 18b, ...: Erhöhungen im Grund der Nut
- 20a, 20b, ...: Vertiefungen im Grund der Nut
- 22a, 22b: Innenkanten des Spannringes

## Patentansprüche

1. Schlauchrollbalg-Luftfeder (2),
wobei mindestens ein Endabschnitt (4a, 4b) des Schlauchrollbalgs (4) mittels eines Spannringes (6) an einem Anschlussteil (8, 10) formschlüssig zugfest und druckdicht befestigt ist, und
wobei das Anschlussteil (8, 10) eine Befestigungsnut (12) mit folgenden Merkmalen aufweist:
(a) die Nut (12) hat einen kegelstumpfförmigen Querschnitt,
(b) wobei der Grund (14) der Nut (12) zylindrisch, und
(c) mindestens eine der Flanken (16a, 16b) der Nut (12) geradlinig konisch mit einem Öffnungswinkel (α) ausgebildet ist,
(d) relativ zur Höhe (H_{S}) des Spannringes (6) ist die Höhe (H_{N}) der Grundfläche (14) der Nut (12) im Bereich von -15% bis +15%, d. h. 0,85≤ H_{N}/H_{S}≤ 1,15,
(e) die Innenfläche (6a) des Spannringes (6) verläuft parallel zur Grundfläche (14) der im Anschlussteil (8, 10) befindlichen Nut (12),
(f) im eingespannten Zustand ist der Innenradius des Spannringes (6) kleiner/gleich mindestens einer der Radien der Nut-Oberkanten (17),
(g) der Abstand zwischen Grundfläche (14) der Nut (12) und Innenseite des Spannringes (6) entspricht im Wesentlichen der Wandstärke S des Schlauchrollbalges (4) reduziert um einen geringfügigen Betrag zur leichten Klemmung der Balgwand (4a, 4b),
(h) der Spannring (6) bildet mit mindestens einer Nutflanke (16a und/oder 16b) einen die Balgwand des Endabschnittes (4a und/oder 4b) festklemmenden Engpass.

2. Schlauchrollbalg-Luftfeder nach Anspruch 1,
**dadurch gekennzeichnet,**
**dass** der Winkel (α) zwischen Luftfederradius und Richtung mindestens einer der Nut-Flanken (16a und/oder 16b) 25° bis 35° beträgt (25°≤ α≤ 35°).

3. Schlauchrollbalg-Luftfeder nach Anspruch 1 oder 2,
**dadurch gekennzeichnet,**
**dass** der Grund (14) der Nut (12) konzentrische Erhöhungen (18a, 18b, ...) oder Vertiefungen (20a, 20b, ...) aufweist.

4. Schlauchrollbalg-Luftfeder nach einem der Ansprüche 1 bis 3,
**dadurch gekennzeichnet,**
**dass** die Innenkanten (22a, 22b) des Spannringes (6) abgerundet sind und/oder mit einer Fase versehen sind.

5. Schlauchrollbalg-Luftfeder nach einem der Ansprüche 1 bis 4,
**dadurch gekennzeichnet,**
**dass** der Schlauchrollbalg (4) vor der Montage gekrempelt ist,
sodass im montierten Zustand seine Außenseite in Kontakt mit dem Grund (14) der Nut (12) steht, während seine Innenseite (6a) die Innenseite des Spannringes (6) berührt.

## Claims

1. Rolling-bellows-type pneumatic spring (2),
wherein at least one end section (4a, 4b) of the rolling bellows (4) is attached to a connecting part (8, 10), in a positively locking, tensile-stress-resistant and pressure-tight fashion by means of a clamping ring (6), and
wherein the connecting part (8, 10) has an attachment groove (12) with the following features:
(a) the groove (12) has a frustum-shaped cross section,
(b) wherein the base (14) of the groove (12) is formed so as to be cylindrical, and
(c) at least one of the edges (16a, 16b) of the groove (12) is formed so as to be linearly conical with an angle of aperture (α),
(d) the height (H_{N}) of the base surface (14) of the groove (12) relative to the height (H_{S}) of the clamping ring (6) is in the range from -15% to +15%, i.e. 0.85 ≤ H_{N}/H_{S} ≤ 1.15,
(e) the inner surface (6a) of the clamping ring (6) extends parallel to the base surface (14) of the groove (12) which is located in the connecting part (8, 10),
(f) in the clamped-in state the inner radius of the clamping ring (6) is less than or equal to at least one of the radii of the upper edges (17) of the groove,
(g) the distance between the base surface (14) of the groove (12) and the inside of the clamping ring (6) corresponds essentially to the wall thickness S of the rolling bellows (4) reduced by a small amount in order to slightly clamp the wall (4a, 4b) of the bellows, and
(h) the clamping ring (6) forms, with at least one groove edge (16a and/or 16b), a constriction which clamps tight the wall of the bellows of the end section (4a and/or 4b).

2. Rolling-bellows-type pneumatic spring according to Claim 1,
**characterized**
**in that** the angle (α) between the radius of the pneumatic spring and the direction of at least one of the groove edges (16a and/or 16b) is 25° to 35° (25°≤ α ≤ 35°).

3. Rolling-bellows-type pneumatic spring according to Claim 1 or 2,
**characterized**
**in that** the base (14) of the groove (12) has concentric elevations (18a, 18b, ...) or depressions (20a, 20b,

4. Rolling-bellows-type pneumatic spring according to one of Claims 1 to 3,
**characterized**
**in that** the inner edges (22a, 22b) of the clamping ring (6) are rounded and/or provided with a chamfer.

5. Rolling-bellows-type pneumatic spring according to one of Claims 1 to 4,
**characterized**
**in that** the rolling bellows (4) is folded over before mounting so that in the mounted state its outside is in contact with the base (14) of the groove (12) while its inside (6a) is in contact with the inside of the clamping ring (6).

## Revendications

1. Amortisseur pneumatique (2) à soufflet déroulant, dans lequel au moins une partie d'extrémité (4a, 4b) du soufflet déroulant (4) est fixée en correspondance géométrique, de manière étanche et résistante en traction à une pièce de raccordement (8, 10) au moyen d'un anneau de serrage (6), la pièce de raccordement (8, 10) présentant une rainure de fixation (12) qui a les caractéristiques suivantes :
(a) la rainure (12) a une section transversale de forme tronconique,
(b) le fond (14) de la rainure (12) est cylindrique et
(c) au moins l'un des flancs (16a, 16b) de la rainure (12) est rectiligne et présente un angle d'ouverture de cône (α),
(d) la hauteur (H_{N}) de la surface de base (14) de la rainure (12) est comprise dans la plage -15 % à +15 %, c'est-à-dire 0,85 ≤ H_{N}/H_{S} ≤ 1,15, par rapport à la hauteur (H_{S}) de l'anneau de serrage (6),
(e) la surface intérieure (6a) de l'anneau de serrage (6) s'étend parallèlement à la surface de base (14) de la rainure (12) ménagée dans la pièce de raccordement (8, 10),
(f) à l'état serré, le rayon intérieur de l'anneau de serrage (6) est inférieur ou égal à au moins l'un des rayons des chants supérieurs (17) de la rainure,
(g) la distance entre la surface de base (14) de la rainure (12) et le côté intérieur de l'anneau de serrage (6) correspond essentiellement à l'épaisseur S de la paroi du soufflet déroulant (4), diminuée d'une petite valeur pour permettre un léger serrage de la paroi (4a, 4b) du soufflet,
(h) l'anneau de serrage (6) forme avec au moins un flanc (16a et/ou 16b) de la rainure un ajustement étroit qui serre la paroi de la partie d'extrémité (4a et/ou 4b) du soufflet.

2. Amortisseur pneumatique à soufflet déroulant selon la revendication 1, **caractérisé en ce que** l'angle (α) formé entre le rayon de l'amortisseur pneumatique et la direction d'au moins l'un des flancs (16a et/ou 16b) de la rainure est compris entre 25° et 35° (25° ≤ α ≤ 35°).

3. Amortisseur pneumatique à soufflet déroulant selon les revendications 1 ou 2, **caractérisé en ce que** le fond (14) de la rainure (12) présente des augmentations concentriques de hauteur (18a, 18b, ...) ou des creux concentriques (20a, 20b, ...).

4. Amortisseur pneumatique à soufflet déroulant selon l'une des revendications 1 à 3, **caractérisé en ce que** les arêtes intérieures (22a, 22b) de l'anneau de serrage (6) sont arrondies et/ou dotées d'un chanfrein.

5. Amortisseur pneumatique à soufflet déroulant selon l'une des revendications 1 à 4, **caractérisé en ce que** le soufflet déroulant (4) est battu avant d'être monté de telle sorte que lorsqu'il est monté, son côté extérieur est en contact avec le fond (14) de la rainure (12) tandis que son côté intérieur (6a) est en contact avec le côté intérieur de l'anneau de serrage (6).
